# EUROPEAN PATENT SPECIFICATION

(11) **EP 0 737 424 B1**
(45) Date of publication and mention of the grant of the patent: **02.07.2003**
(21) Application number: 96105265.1
(22) Date of filing: 02.04.1996
(51) Int. Cl.: A23K 1/18, A01K 61/02

(54) **Food for fish conglomerated in inert support**
Fischfutter, eingeschlossen in einem inerten Träger
Aliment pour poissons, congloméré dans un support inerte

(30) Priority: 13.04.1995 IT UD950067
(43) Date of publication of application: 16.10.1996
(73) Proprietor: Société des Produits Nestlé S.A., 1800 Vevey (CH)
(72) Inventor: D'Odorico, Giorgio, 20143 Milano (IT)
(74) Representative: Thomas, Alain

(56) References cited:
- DE-A- 1 812 351
- FR-A- 2 584 270
- US-A- 4 950 488
- US-A- 5 079 201
- PATENT ABSTRACTS OF JAPAN vol. 17, no. 364 (C-1081), 9 July 1993 & JP-A-05 056754 (HAKODATE SUISAN TANPAKU KAKO), 9 March 1993,
- PATENT ABSTRACTS OF JAPAN vol. 11, no. 3 (C-395), 7 January 1987 & JP-A-61 181345 (MITSUBISHI METAL CORP), 14 August 1986,

## Description

This invention concerns food for fish conglomerated in inert support.

In prior art food for fish, conglomerated in inert support, is already known and disclosed on the market, particularly for aquariums for family use, where the necessity of continuously feeding the fish contained in them is known.

It is known that family aquariums, even though endowed of an adequate water replacement, can have pollution problems that can give rise to the death of the fish contained.

The food conglomerated in inert support is particularly useful, both because the conglomerated food is encapsulated with the same support, avoiding a rapid natural biodegradation, and because, being heavier than water, it deposits on the bottom where it may be easily reached by the fish and also because generally the inert support is hardly soluble in water, or so slowly as to contain the food for a long time.

At the moment in these types of food substances on the base of chalk and/or of calcium carbonate are used as inert support.

The present supports have many advantages and fulfil the main scopes required for these kinds of food, in fact they contain the food well and maintain it in good preservation.

Further, in moderate quantity they are not substantially harmful for the fish.

However, there have always been cases of fish death in aquariums, and nobody understood why, calcium carbonate being considered not toxic.

It also happened that the food was healthy and not polluted or toxic and that not even this was the cause of the fish death.

It is important to know that the food is conglomerated in various forms like shells, sticks, cubes etc. and the food is contained in the support.

After attentive and repeated studies, it has been found out unexpectedly that the cause of these deaths is that the small food cubes when dissolving though slowly or, even worse, accelerated by crumbling provoked by the fish trying to get at the food contained in them, contributed to increasing the hardness of the water and to the modification of the ph, making the environment unfitting for the life of the fish.

For this reason, as claimed, according to the present invention it was thought to use as support of the food an inert material that does not contain calcium carbonate nor chalk.

After further studies and innumerable tests, the inventor directed his attention to the natural surroundings in which the fish live, particularly in tropical places, very similar to the conditions of aquarium, and had come to the discovery that the oldest inert material and least harmful for the environment discussed here is substantially an inert material on silica basis.
In Prior art Patent Abstract of Japan vol.17, n.364 (C-1081), 9 July 1993 & JP-A-05056754 (HAKODATE SUISAN TANPAKU KAKO), 9 March 1993, * abstract*: discloses a production system of feed for fish and shellfish.
*"Feed component predominant in fish and shellfish broth* (*e.g. of dried small sardines, dried bonito*) *and water are added to a natural polysaccharide such as sodium alginate followed by kneading and then contact with an aqueous solution of polyvalent alkali metal* (*eg.Mg,Ca*) *salt to effect gelation, and the gel is raised in temperature and then put to vacuum drying, thus obtaining the objective feed. It is preferable that* 1-200 pts *wt of silica be formulated in a total of 100 pts.wt. of the feed component and natural polysaccharide berfore gelation*."
The scope to propose this solution is not the water pollution, but to obtain "*a title feed low in sedimentation rate"* (see 1st paragraph of the above mentioned abstract).

The solution of this invention, because the scope is completely different, as claimed combines the absence of addings or treating the feed with Calcium substances with the presence of silicium is vital for avoiding pollutions of the water and fish death.

After various tests it has been found out for this purpose that the amount of SiO2 must not be lower to the 50% and preferably at least around 70%.

Also fair quantities of minerals in the form of aluminium silicates can well be supported, wherefore the inert material can also be a compound of these minerals and there can also be smaller presences of other minerals, like sodium and potassium, but the calcium content must be sensitively poor, e. g. calcium carbonate (CaCO3) preferably less than 1%.

The material according to the present invention may be either fossil flour or even flour of volcanic origin, as long as it is on silica base and not of chalk.

The formation of the slurry and conglomeration of the food is carried out according to the traditional techniques, as will be explained hereinafter.

These inert materials are widely spread on the market under different trade names as for example "Perlite" or "Dicalite" or diatom flour or others.

The most suitable solution however seems to be diatom flour.

The mineral perlite is an amorphous material consisting of melted aluminium silicate, sodium and potassium.

For creating the product, the mineral is ground and heated 800-1000° C to make it expand.

The expansion happens by natural action by means of the rapid gaseous dilatation of the organic materials contained in it.

The expansion leads to a volume increase of 20 or more times of its original volume.

With this cooking, the water and the eventually contained organic materials are noticeably eliminated.

The expanded particles are then ground and sifted for supplying the desired granulometry to the inert material.

The product obtained is inert, with low solubility in mineral and organic acids.

The solubility in alkalis, also strong ones, differs according to the temperature and the contact time.

The material has no taste, flavor or odor and does not alter the chemical characteristics of the water of the aquarium.

### TYPICAL CHARACTERISTICS

| Physical aspects | |
|---|---|
| Apparent shape | dry dust |
| Color | White |
| Whiteness degree | 72 |
| Specific weight | 2,33 |
| Specific surface | 2,5 M2/G |
| Retention at 200 mesh (74 u) | 8% |
| Retention at 200 mesh (typical) | 2-4% |
| Organic substances | absent |
| pH | 4,5-6,5 |

| Chemical composition | |
|---|---|
| SiO2 | 72,0% |
| A12O3 | 14,0% |
| Fe2O3 | 0,7% |
| Na2O | 4,0% |
| K2O | 8,8% |
| CaO | O,3% |
| MgO | O,1% |
| TiO2 | O,1% |

The present values are to be considered as indicative and not binding

| Standard specifications | |
|---|---|
| Apparent density | 90-120 g/l |
| | |
| Absorption in water | 240-300 % |
| Absorption in oil | 200-280 % |
| Humidity at the origin | 1 % |

| Typical diatom substance characteristics | |
|---|---|
| Mineralogical | Diatom |
| Type | calcined |
| Apparent shape | dry dust |
| Color | pink |
| Specific weight | 2,25 |
| Density of the damp heap (kg/m3) | 96-144 |
| Density of the damp panel (kg/m3) | 368-448 |
| Specific relative capacity | 140 |
| Permeability (darcy) - | 0,04 |
| Retention at 105 u (%) | 0,5-3 |

Remainder at the sieve with opening of:

| | | | | | | |
|---|---|---|---|---|---|---|
| micron | -2 | 2-6 | 6-10 | 10-20 | 20-40 | +40 |
| vol % | 2-4 | 32-42 | 17-23 | 21-25 | 12-18 | 2-5 |
| Average diameter (u) | | | | | 7,3-8,4 | |
| pli (solution at 10%) | | | | | 5,6-7,5 | |
| Humidity (%) | | | | | < 0,5 | |
| Indicative values | | | | | | |

| Typical characteristics of another diatom substance: | |
|---|---|
| Mineralogical | diatom |
| Type | calcined on flow |
| Apparent shape | dry dust |

| | |
|---|---|
| Color | White |
| Specific weight | 2,33 |
| Density of the damp heap (kg/m3) | 240-272 |
| Density of the damp panel (kg/m3) | 344-376 |
| Specific relative capacity | 700 |
| Permeability (darcy) | - 1,0 |
| Retention at 105 u (%) | 3-7 |

Remainder at the sieve with opening of:

| | | | | | |
|---|---|---|---|---|---|
| micron | -10 | 10-20 | 20-40 | 40-80 | +80 |
| vol % | 3-5 | 32-42 | 43-47 | 8-14 | 1-4 |
| Average diameter (u) | | | | 20-24 | |
| pli (solution at 10%) | | | | 9-10 | |
| Humidity (%) | | | | <0,5 | |
| Indicative values. | | | | | |

Tests on Perlite (mineralogical origin: volcanic, see specifications above) and on the two diatom soil kinds as indicated above.

In the laboratory, after repeated attempts, blocks were created named "week-end and holidays" having the following characteristics:
1) production method: remarkably simplified; proposable for industrial production;
2) new and diversified shapes - small shell (type Cardium) with average weight g. O,9; stick with average weight g. O,9;
   - average shell for the periods of holiday-making (average weight g 3,5), - big shell (type Pecten) for the periods of holiday-making (average weight g.5).
3) coloring: various tones of blue and pink;
   The pink coloring was naturally obtained by the addition of the leaven "Phaffia rodozyme", such leaven is a pigmental substance in the cutis of the fish, as it contains the carotenoid astaxantina in abundance;
   The results are the following:
   1. Long life in water: the compact blocks in water do not dissolve for a long time (up to a month) ; their disgregation is effected by the fish that eat them.
   2. They are not polluting: they do not alter the hardness nor the pH of the water; they do not foul the water
   3. Eatability and attractiveness: they are fully eatable, even though the inert support, made up of perlite or diatoms soil, is not assimilable by the fish;
      - the degree of attractiveness of the entire week-end block is defined as "good".

### Feeding tests

### I. Test carried out on gold fish.

Sic gold fish, disposed in groups of two subjects in three aquariums in plastic, were nourished for 10 days with the following food (tab. 1):
- week-end block sample 1 (diatom soil base);
- week-end block sample 2 (diatom soil base with alginates);
- extruded food for tropical fish (given out daily).

### Results (table 2)

Both food samples for the week-end were consumed in a fair quantity and remained compact in water for the whole period of the test. The parameters of the analysis of the water appeared similar to those reported from the control thesis, in particular regarding the pH and the hardness of the water. The sample 2, containing alginate, did not differ remarkably from the sample 1, therefore the per cent composition of sample 1 has been considered as definitive, thus the better one (without alginates).

### II. Test carried out on gold fish

Ten gold fish, evenly subdivided in five aquariums in plastic, had been supplied with some week-end holidays food samples, whose composition, without alginate, is exposed in table 1. In each aquarium a sample different by shape and coloring was placed.

| Sample | Form | Color |
|---|---|---|
| A) | stick | light blue |
| B) | stick | salmon |
| C) | small shell (Cardium) | salmon |
| D) | average shell (Turbo) | salmon |
| E) | big shell (old form) | light blue |

The color salmon was obtained adding 4% of leaven "Phaffia rodozyme" to the base mix.

### Results

The samples B and C were respectively consumed for 90 and 85% of their total volume (tab. 3). The sample D, that in view of its forms remained floating in the water for the whole test period, was ingested by the fish in smaller quantity if compared to the other blocks experimented. Regarding the analysis of the waters (tab.4), the values of pH and GH resulted homogenous, while the nitrites remained at levels lower than 1 ppm.

According to the analysis of the results the best forms are the more compact ones like for example the long shells in relation to the razor shells (of course in adequate dimensions).

**TAB. 2**

| Week-end block: results of a second feeding test carried out on gold fish with analysis of the water. | | | |
|---|---|---|---|
| Samples parameters | 1° | 2° | 3° |
| Duration of the test (days) | 10 | 10 | 10 |
| Number of subjects in test | 2 | 2 | 2 |
| Litres of water in basin | 12 | 12 | 12 |
| Food weight | 0,83 | 0,85 | 0,35 |
| % eatability (3rd day) | 30 | 20 | 100 |
| % eatability (10th day) | 60 | 50 | 100 |
| Consistence of the compact block | compact | compact | - |
| Color of the fish faeces | whitish | whitish | whitish |
| Water aspect (10th day) | slightly blurred | clears | lightly blurred |

| Analysis of the water | | | |
|---|---|---|---|
| pH | 7,52 | 7,63 | 7,51 |
| GH | 14,3 | 14,1 | 14,4 |
| N02 (mg/l) | 0,29 | 0,24 | 0,55 |
| NH3 (mg/l) | 0,25 | 0,50 | 0,25 |
| Total bacteria colonies | 52 | 32 | 32 |

### WAY OF PRODUCTION

A) Prepare a mix of the following ingredients

| | |
|---|---|
| diatoms soil | 88 - 92% |
| extruded food for tropical fish | 12 - 8% |

soybean lecithin and binder solution as much as is necessary.
B) Bring the binder solution to a temperature of 95° C.
C) Join the diatom soil and the food to the binder solution, mix shortly and pour the still hot product into moulds, possibly in right amounts, in order to avoid a scraping operation, necessary for eliminating excessive slurry. Once cooled and coagulated, the product may be taken out of the moulds and subsequently placed for drying in a stove at the temperature of 50°C for about 15 hours.

The product can have any form as said before and an example in the form of a shell is enclosed.

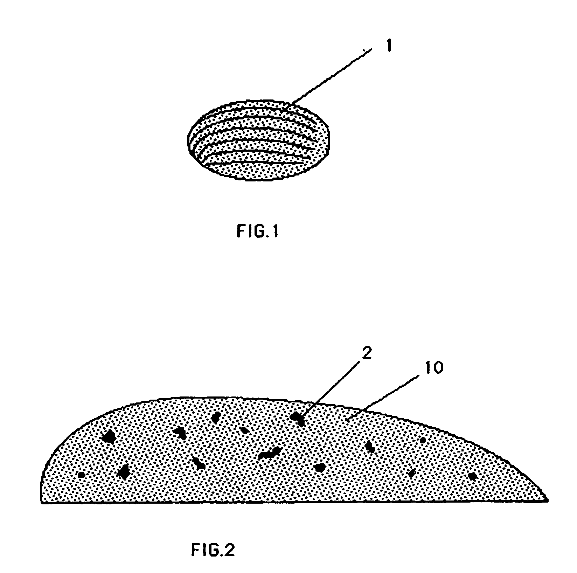

Figure 1 represents a perspective view of the shell;
Figure 2 represents an enlarged view and in section of the shell with visualization of the food contained.

With reference to the Figures it is disclosed that with 1 is indicated the shell, with 2 the food included in the inert 10.

## Claims

1. Food conglomerate for fish in inert support, of the type having a convenient shape for aquariums, in which the food (2) is contained in an inert substance (10) as conglomerating support that encapsulates the same, to which the fish accedes by crumbling the inert substance (10), **characterized in that** said inert substance (10) is on silica basis, contains at least the 70% of silica and the calcium content is sensitively poor.

2. Food for fish according to the preceding claims, **characterized in that** the silica contained in the inert support substance (10) is substantially SiO2.

## Patentansprüche

1. Futterkonglomerat für Fische in einem inerten Träger eines Typs, der eine für Aquarien geeignete Form aufweist, wobei das Futter (2) in einer Inertsubstanz (10) als konglomerierter Träger enthalten ist, der es verkapselt, wobei die Fische durch Zerkrümmeln der Inertsubstanz (10) zu dem Futter gelangen, **dadurch gekennzeichnet, daß** die genannte Inertsubstanz (10) eine auf Siliciumoxidbasis ist, wenigstens 70% Siliciumoxid enthält und der Calciumgehalt ziemlich gering ist.

2. Fischfutter nach dem vorausgehenden Anspruch, **dadurch gekennzeichnet, daß** das in der inerten Trägersubstanz (10) enthaltene Siliciumoxid im wesentlichen SiO₂ ist.

## Revendications

1. Conglomérat d'aliment pour poissons dans un support inerte, du type ayant une forme commode pour des aquariums, dans lequel l'aliment (2) est contenu dans une substance inerte (10) en tant que support conglomérant qui encapsule celui-ci, auquel le poisson accède en émiettant la substance inerte (10), **caractérisé en ce que** ladite substance inerte (10) est à base de silice, contient au moins 70 % de silice et la teneur en calcium est sensiblement faible.

2. Aliment pour poissons selon la revendication précédente, **caractérisé en ce que** la silice contenue dans la substance de support inerte (10) est essentiellement du SiO₂.
